(19) Europäisches Patentamt
European Patent Office
Office européen des brevets

(11) **EP 2 096 014 B1**

(12) **EUROPÄISCHE PATENTSCHRIFT**

(45) Veröffentlichungstag und Bekanntmachung des Hinweises auf die Patenterteilung:
**10.06.2015 Patentblatt 2015/24**

(21) Anmeldenummer: **09004231.8**

(22) Anmeldetag: **10.04.2003**

(51) Int Cl.:
*B60K 6/48* (2007.10)          *B60W 20/00* (2006.01)
*F02N 11/04* (2006.01)        *F02N 11/08* (2006.01)
*F16D 13/38* (2006.01)        *F16D 13/58* (2006.01)
*F16D 13/71* (2006.01)        *F16D 13/75* (2006.01)
*F16D 23/12* (2006.01)        *F16D 21/06* (2006.01)
*F16D 25/08* (2006.01)        *F16D 25/12* (2006.01)
*F16D 27/00* (2006.01)        *F16D 28/00* (2006.01)
*F16D 29/00* (2006.01)        *F16D 48/04* (2006.01)
*F16D 48/06* (2006.01)        *F16H 57/04* (2010.01)
*F16F 15/14* (2006.01)        *B60W 10/06* (2006.01)
*B60W 10/08* (2006.01)        *B60W 10/02* (2006.01)

(54) **Verfahren, Vorrichtung und deren Verwendung zum Betrieb eines Kraftfahrzeuges**

Method, device and use of same for operating a motor vehicle

Procédé, dispositif et leur utilisation pour le fonctionnement d'un véhicule automobile

(84) Benannte Vertragsstaaten:
**AT BE BG CH CY CZ DE DK EE ES FI FR GB GR HU IE IT LI LU MC NL PT RO SE SI SK TR**

(30) Priorität: **10.04.2002 DE 10215715**
**24.08.2002 DE 10238866**

(43) Veröffentlichungstag der Anmeldung:
**02.09.2009 Patentblatt 2009/36**

(62) Dokumentnummer(n) der früheren Anmeldung(en) nach Art. 76 EPÜ:
**03727188.9 / 1 497 151**

(73) Patentinhaber: **Schaeffler Technologies AG & Co. KG**
**91074 Herzogenaurach (DE)**

(72) Erfinder:
• **Berger, Reinhard, Dr.**
**07743 Jena (DE)**
• **Küpper, Klaus, Dr.**
**8010 Graz (AT)**
• **Schneider, Georg**
**71636 Ludwigsburg (DE)**

(56) Entgegenhaltungen:
**EP-A2- 0 710 787     EP-A2- 0 916 547**
**US-A- 5 960 897**

**Beschreibung**

Die Erfindung betrifft ein Verfahren mit den Merkmalen gemäß dem Oberbegriff des Anspruchs 1.

Die europäische Patentanmeldung EP 0 916 547 A2, die als nächstliegender Stand der Technik angesehen wird, offenbart ein Verfahren zur Steuerung eines Antriebsstrangs, der einen Verbrennungsmotor, einen Elektromotor und eine Kupplung aufweist, für ein Fahrzeug, das sowohl verbrennungsmotorisch als auch elektromotorisch anfahren kann.

Der vorliegenden Erfindung liegt die Aufgabe zugrunde, bei einem hybriden Antriebssystem, bei dem sowohl verbrennungsmotorisch als auch elektromotorisch angefahren werden kann, Strategien zu entwickeln, die dem Fahrer unabhängig vom gewählten Motor ein reproduzierbares Anfahrverhalten geben.

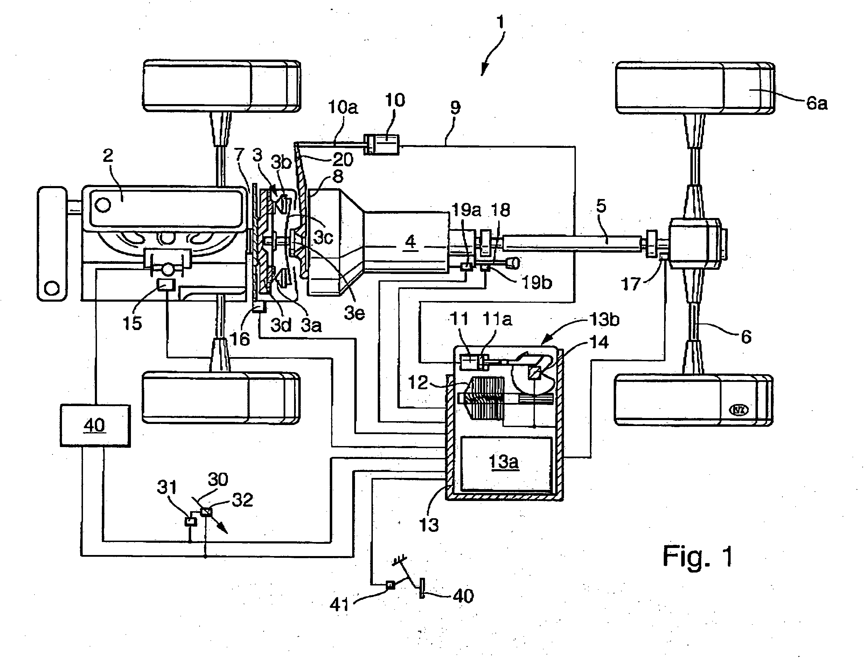

Gemäß Figur 1 weist ein Fahrzeug 1 eine Antriebseinheit 2, wie einen Motor oder eine Brennkraftmaschine, auf. Weiterhin sind im Antriebsstrang des Fahrzeuges 1 ein Drehmomentübertragungssystem 3 und ein Getriebe 4 angeordnet. In diesem Ausführungsbeispiel ist das Drehmomentübertragungssystem 3 im Kraftfluss zwischen Motor und Getriebe angeordnet, wobei ein Antriebsmoment des Motors über das Drehmomentübertragungssystem 3 an das Getriebe 4 und von dem Getriebe 4 abtriebsseitig an eine Abtriebswelle 5 und an eine nachgeordnete Achse 6 sowie an die Räder 6a übertragen wird.

Das Drehmomentübertragungssystem 3 ist als Kupplung, wie z. B. als Reibungskupplung, Lamellenkupplung, Magnetpulverkupplung oder Wandlerüberbrückungskupplung, ausgestaltet, wobei die Kupplung eine selbsteinstellende oder eine verschleißausgleichende Kupplung sein kann. Das Getriebe 4 ist ein unterbrechungsfreies Schaltgetriebe (USG). Entsprechend dem erfindungsgemäßen Gedanken kann das Getriebe auch ein automatisiertes Schaltgetriebe (ASG) sein, welches mittels zumindest eines Aktors automatisiert geschaltet werden kann. Als automatisiertes Schaltgetriebe ist im weiteren ein automatisiertes Getriebe zu verstehen, welches mit einer Zugkraftunterbrechung geschaltet wird und bei dem der Schaltvorgang der Getriebeübersetzung mittels zumindest eines Aktors angesteuert durchgeführt wird.

Weiterhin kann als USG auch ein Automatgetriebe Verwendung finden, wobei ein Automatgetriebe ein Getriebe im wesentlichen ohne Zugkraftunterbrechung bei den Schaltvorgängen ist und das in der Regel durch Planetengetriebestufen aufgebaut ist.

Weiterhin kann ein stufenlos einstellbares Getriebe, wie beispielsweise Kegelscheibenumschlingungsgetriebe eingesetzt werden. Das Automatgetriebe kann auch mit einem abtriebsseitig angeordneten Drehmomentübertragungssystem 3, wie eine Kupplung oder eine Reibungskupplung, ausgestaltet sein. Das Drehmomentübertragungssystem 3 kann weiterhin als Anfahrkupplung und/oder Wendesatzkupplung zur Drehrichtungsumkehr und/oder Sicherheitskupplung mit einem gezielt ansteuerbaren übertragbaren Drehmoment ausgestaltet sein. Das Drehmomentübertragungssystem 3 kann eine Trockenreibungskupplung oder eine nass laufende Reibungskupplung sein, die beispielsweise in einem Fluid läuft. Ebenso kann es ein Drehmomentwandler sein.

Das Drehmomentübertragungssystem 3 weist eine Antriebsseite 7 und eine Abtriebsseite 8 auf, wobei ein Drehmoment von der Antriebsseite 7 auf die Abtriebsseite 8 übertragen wird, indem z. B. die Kupplungsscheibe 3a mittels der Druckplatte 3b, der Tellerfeder 3c und dem Ausrücklager 3e sowie dem Schwungrad 3d kraftbeaufschlagt wird. Zu dieser Beaufschlagung wird der Ausrückhebel 20 mittels einer Betätigungseinrichtung, z. B. einem Aktor, betätigt.

Die Ansteuerung des Drehmomentübertragungssystems 3 erfolgt mittels einer Steuereinheit 13, wie z. B. einem Steuergerät, welches die Steuerelektronik 13a und den Aktor 13b umfassen kann. In einer anderen vorteilhaften Ausführung können der Aktor 13b und die Steuerelektronik 13a auch in zwei unterschiedlichen Baueinheiten, wie z. B. Gehäusen, angeordnet sein.

Die Steuereinheit 13 kann die Steuer- und Leistungselektronik zur Ansteuerung des Antriebsmotors 12 des Aktors 13b enthalten. Dadurch kann beispielsweise vorteilhaft erreicht werden, dass das System als einzigen Bauraum den Bauraum für den Aktor 13b mit Elektronik benötigt. Der Aktor 13b besteht aus dem Antriebsmotor 12, wie z. B. einem Elektromotor, wobei der Elektromotor 12 über ein Getriebe, wie z. B. ein Schneckengetriebe, ein Stirnradgetriebe, ein Kurbelgetriebe oder ein Gewindespindelgetriebe, auf einen Geberzylinder 11 wirkt. Diese Wirkung auf den Geberzylinder 11 kann direkt oder über ein Gestänge erfolgen.

Die Bewegung des Ausgangsteiles des Aktors 13b, wie z. B. des Geberzylinderkolbens 11 a, wird mit einem Kupplungswegsensor 14 detektiert, welcher die Position oder Stellung oder die Geschwindigkeit oder die Beschleunigung einer Größe detektiert, welche proportional zur Position bzw. Einrückposition respektive der Geschwindigkeit oder Beschleunigung der Kupplung ist. Der Geberzylinder 11 ist über eine Druckmittelleitung 9, wie z. B. eine Hydraulikleitung, mit dem Nehmerzylinder 10 verbunden. Das Ausgangselement 10a des Nehmerzylinders ist mit dem Ausrückmittel 20, z. B. einem Ausrückhebel, wirkverbunden, so dass eine Bewegung des Ausgangsteiles 10a des Nehmerzylinders 10 bewirkt, dass das Ausrückmittel 20 ebenfalls bewegt oder verkippt wird, um das von der Kupplung 3 übertragbare Drehmoment anzusteuern.

Der Aktor 13b zur Ansteuerung des übertragbaren Drehmoments des Drehmomentübertragungssystems 3 kann druckmittelbetätigbar sein, d.h., er kann einen Druckmittelgeber- und Nehmerzylinder aufweisen. Das Druckmittel kann beispielsweise ein Hydraulikfluid oder ein Pneumatikmedium sein. Die Betätigung des Druckmittelgeberzylinders kann elektromotorisch erfolgen, wobei der als Antriebselement 12 vorgesehene Elektromotor elektronisch angesteuert werden kann. Das Antriebselement 12 des Aktors 13b kann neben einem elektromotorischen Antriebselement auch ein anderes, beispielsweise druckmittelbetätigtes Antriebselement sein. Weiterhin können Magnetaktoren verwendet werden, um eine Position eines Elementes einzustellen.

Bei einer Reibungskupplung erfolgt die Ansteuerung des übertragbaren Drehmomentes dadurch, dass die Anpressung der Reibbeläge der Kupplungsscheibe zwischen dem Schwungrad 3d und der Druckplatte 3b gezielt erfolgt. Über die Stellung des Ausrückmittels 20, wie z. B. einer Ausrückgabel oder eines Zentralausrückers, kann die Kraftbeaufschlagung der Druckplatte 3b respektive der Reibbeläge gezielt angesteuert werden, wobei die Druckplatte 3b dabei zwischen zwei Endpositionen bewegt und beliebig eingestellt und fixiert werden kann. Die eine Endposition entspricht einer völlig eingerückten Kupplungsposition und die andere Endposition einer völlig ausgerückten Kupplungsposition. Zur Ansteuerung eines übertragbaren Drehmomentes, welches beispielsweise geringer ist als das momentan anliegende Motormoment, kann beispielsweise eine Position der Druckplatte 3b angesteuert werden, die in einem Zwischenbereich zwischen den beiden Endpositionen liegt. Die Kupplung kann mittels der gezielten Ansteuerung des Ausrückmittels 20 in dieser Position fixiert werden. Es können aber auch übertragbare Kupplungsmomente angesteuert werden, die definiert über den momentan anstehenden Motormomenten liegen. In einem solchen Fall können die aktuell anstehenden Motormomente übertragen werden, wobei die Drehmoment-Ungleichförmigkeiten im Antriebsstrang in Form von beispielsweise Drehmomentspitzen gedämpft und/oder isoliert werden.

Zur Ansteuerung des Drehmomentübertragungssystems 3 werden weiterhin Sensoren verwendet, die zumindest zeitweise die relevanten Größen des gesamten Systems überwachen und die zur Steuerung notwendigen Zustandsgrößen, Signale und Messwerte liefern, die von der Steuereinheit verarbeitet werden, wobei eine Signalverbindung zu anderen Elektronikeinheiten, wie beispielsweise zu einer Motorelektronik oder einer Elektronik eines Antiblockiersystems (ABS) oder einer Antischlupfregelung (ASR) vorgesehen sein kann und bestehen kann. Die Sensoren detektieren beispielsweise Drehzahlen, wie Raddrehzahlen, Motordrehzahlen, die Position des Lasthebels, die Drosselklappenstellung, die Gangposition des Getriebes, eine Schaltabsicht und weitere fahrzeugspezifische Kenngrößen.

Die Fig. 1 zeigt, dass ein Drosselklappensensor 15, ein Motordrehzahlsensor 16 sowie ein Tachosensor 17 Verwendung finden können und Messwerte bzw. Informationen an das Steuergerät 13 weiterleiten. Die Elektronikeinheit, wie z. B. eine Computereinheit, der Steuerelektronik 13a verarbeitet die Systemeingangsgrößen und gibt Steuersignale an den Aktor 13b weiter.

Das Getriebe ist als z. B. Stufenwechselgetriebe ausgestaltet, wobei die Übersetzungsstufen mittels eines Schalthebels 18 gewechselt werden oder das Getriebe mittels dieses Schalthebels 18 betätigt oder bedient wird. Weiterhin ist an dem Schalthebel 18 des Handschaltgetriebes zumindest ein Sensor 19b angeordnet, welcher die Schaltabsicht und/oder die Gangposition detektiert und an das Steuergerät 13 weiterleitet. Der Sensor 19a ist am Getriebe angelenkt und detektiert die aktuelle Gangposition und/oder eine Schaltabsicht. Die Schaltabsichtserkennung unter Verwendung von zumindest einem der beiden Sensoren 19a, 19b kann dadurch erfolgen, dass der Sensor ein Kraftsensor ist, welcher die auf den Schalthebel 18 wirkende Kraft detektiert. Weiterhin kann der Sensor aber auch als Weg- oder Positionssensor ausgestaltet sein, wobei die Steuereinheit aus der zeitlichen Veränderung des Positionssignals eine Schaltabsicht erkennt.

Das Steuergerät 13 steht mit allen Sensoren zumindest zeitweise in Signalverbindung und bewertet die Sensorsignale und Systemeingangsgrößen in der Art und Weise, dass in Abhängigkeit von dem aktuellen Betriebspunkt die Steuereinheit Steuer- oder Regelungsbefehle an den zumindest einen Aktor 13b ausgibt. Der Antriebsmotor 12 des Aktors 13b, z. B. ein Elektromotor, erhält von der Steuereinheit, welche die Kupplungsbetätigung ansteuert, eine Stellgröße in Abhängigkeit von Messwerten und/oder Systemeingangsgrößen und/oder Signalen der angeschlossenen Sensorik. Hierzu ist in dem Steuergerät 13 ein Steuerprogramm als Hard- und/oder als Software implementiert, das die eingehenden Signale bewertet und anhand von Vergleichen und/oder Funktionen und/oder Kennfeldern die Ausgangsgrößen berechnet oder bestimmt.

Das Steuergerät 13 hat in vorteilhafter Weise eine Drehmomentbestimmungseinheit, eine Gangpositionsbestimmungseinheit, eine Schlupfbestimmungseinheit und/oder eine Betriebszustandsbestimmungseinheit implementiert oder es steht mit zumindest einer dieser Einheiten in Signalverbindung. Diese Einheiten können durch Steuerprogramme als Hardware und/oder als Software implementiert sein, so dass mittels der eingehenden Sensorsignale das Drehmoment der Antriebseinheit 2 des Fahrzeuges 1, die Gangposition des Getriebes 4 sowie der Schlupf, welcher im Bereich des Drehmomentübertragungssystems 3 herrscht und der aktuelle Betriebszustand des Fahrzeuges 1 bestimmt werden können. Die Gangpositionsbestimmungseinheit ermittelt anhand der Signale der Sensoren 19a und 19b den aktuell eingelegten Gang. Dabei sind die Sensoren 19a, 19b am Schalthebel und/oder an getriebeinternen Stellmitteln, wie beispielsweise einer zentralen Schaltwelle oder Schaltstange, angelenkt und diese detektieren, beispielsweise die Lage und/oder die Geschwindigkeit dieser Bauteile. Weiterhin kann ein Lasthebelsensor 31 am Lasthebel 30, wie z. B. an einem Gaspedal, angeordnet sein, welcher die Lasthebelposition detektiert. Ein weiterer Sensor 32 kann als Leerlaufschalter fungieren, d.h. bei betätigtem Lasthebel 30 bzw. Gaspedal ist dieser Leerlaufschalter 32 eingeschaltet und bei nicht betätigtem Lasthebel 30 ist er ausgeschaltet, so dass durch diese digitale Information erkannt werden kann, ob der Lasthebel 30 betätigt wird. Der Lasthebelsensor 31 detektiert den Grad der Betätigung des Lasthebels 30.

Die Fig. 1 zeigt neben dem Lasthebel 30 und den damit in Verbindung stehenden Sensoren ein Bremsenbetätigungselement 40 zur Betätigung der Betriebsbremse oder der Feststellbremse, wie z. B. ein Bremspedal, einen Handbremshebel oder ein hand- oder fußbetätigtes Betätigungselement der Feststellbremse. Zumindest ein Sensor 41 ist an dem Betätigungselement 40 angeordnet und überwacht dessen Betätigung. Der Sensor 41 ist beispielsweise als digitaler Sensor, wie z. B. als Schalter, ausgestaltet, wobei dieser detektiert, dass das Bremsenbetätigungselement 40 betätigt oder nicht betätigt ist. Mit dem Sensor 41 kann eine Signaleinrichtung, wie z. B. eine Bremsleuchte, in Signalverbindung stehen, welche signalisiert, dass die Bremse betätigt ist. Dies kann sowohl für die Betriebsbremse als auch für die Feststellbremse erfolgen. Der Sensor 41 kann jedoch auch als analoger Sensor ausgestaltet sein, wobei ein solcher Sensor, wie beispielsweise ein Potentiometer, den Grad der Betätigung des Bremsenbetätigungselementes 41 ermittelt. Auch dieser Sensor kann mit einer Signaleinrichtung in Signalverbindung stehen.

Nachfolgend wird eine Ausgestaltung der vorliegenden Erfindung beschrieben, bei der eine geeignete Steuerung für einen Fahrzeugtriebstrang mit einem Kurbelwellenstartergenerator vorgeschlagen wird.

Es werden Strategien zum Steuern eines Fahrzeugtriebstrangs vorgesehen, welcher z. B einem Verbrennungsmotor, einem Kurbelwellenstartergenerator zwischen zwei Kupplungen und ein automatisiertes Schaltgetriebe (ASG) umfasst.

Die Vorteile durch die Verwendung eines Startergenerators liegen zum einen in der Komfortsteigerung für den Fahrer (u.a. Torsionsschwingungsdämpfung) und zum anderen in der Möglichkeit der Energierückgewinnung (Rekuperation).

Eine besonders vorteilhafte Anordnung besteht in der Plazierung des Startergenerators zwischen zwei Kupplungen an der Kurbelwelle, weil damit die Möglichkeit besteht, den Verbrennungsmotor während der Schubphasen vom Abtrieb abzukoppeln, um Energie durch elektrische Bremsen zurückzugewinnen. Diese Anordnung wird im folgenden beschrieben.

Bei dieser Anordnung ist zu beachten, dass der Verbrennungsmotor beim Beenden einer Rekuperationsphase gestartet werden sollte, ohne dass der Fahrer einen Ruck verspürt. Die gleiche Situation liegt vor, wenn während einer lediglich über die E-Maschine durchgeführte Anfahrt der Verbrennungsmotor zur Erhöhung der Zugkraft zugeschaltet werden muss. Dies kann z. B. bei einer Berganfahrt oder bei einer gering geladenen Batterie notwendig sein.

Um Entscheiden zu können, wann während einer Anfahrt der Verbrennungsmotor zugeschaltet werden soll, müssen sinnvolle Kriterien definiert werden.

Gemäß einer Weiterbildung der Erfindung kann das Anfahren des Fahrzeuges je nach Fahrerwunsch rein elektrisch oder mit Unterstützung des Verbrennungsmotors durchgeführt werden. Der Fahrerwunsch kann dabei über mehrere Wege direkt ermittelt werden. Beispielsweise kann in Abhängigkeit von der Position eines Fahrprogrammschalters über den Anfahrmodus entschieden werden, wie die Anfahrt durchgeführt werden soll. Z. B. bei aktiviertem Economy-Programm kann eine rein elektrische Anfahrt und bei aktiviertem Sport-Programm kann mit dem Verbrennungsmotor oder auch in Kombination mit dem elektrischen Antrieb eine Anfahrt vorgesehen werden. Es ist auch möglich, andere Kombinationen zu wählen.

Eine weitere Möglichkeit besteht in der Auswertung der Fahrpedalposition. Das Zuschalten des Verbrennungsmotors während einer elektrischen Anfahrt könnte aktiviert werden, wenn z. B. ein Kickdown-Schalter für mehr als eine bestimmte Zeitdauer betätigt wird. Ferner kann eine Zuschaltung erfolgen, wenn z. B. die Pedalposition eine gewisse Schwelle überschreitet und/oder eine weitere Schwelle für mehr als eine bestimmte Zeitdauer überschritten wird. Es ist auch denkbar, dass der Verbrennungsmotor aktiviert wird, wenn die zeitliche Änderung der Pedalposition einen bestimmten positiven Wert überschreitet. Schließlich ist auch eine beliebige Kombination der genannten und weiteren Möglichkeiten denkbar.

Eine andere Weiterbildung der Erfindung kann vorsehen, dass der Verbrennungsmotor bei einer Anfahrt dann hinzugeschaltet wird, wenn z. B. die Steuerung bemerkt, dass das Zugkraftangebot nicht dem Fahrerwunsch entspricht. Dies kann bevorzugt durch einen Vergleich zwischen der Fahrzeuglängsbeschleunigung, welche z. B. anhand der zeitlichen Änderung der Raddrehzahlen berechnet wird, und der aufgrund der berechneten Zugkraft, welche anhand der Drehmomente des Verbrennungsmotors, der E-Maschine und der Kupplungen berechnet wird, vermuteten Beschleunigung ermittelt werden. Wenn z. B. die tatsächliche Fahrzeugbeschleunigung für mehr als eine gewisse Zeitdauer um mehr als einen bestimmten Betrag kleiner als die aufgrund der berechneten Zugkraft angenommene Beschleunigung ist, wird das Zuschalten des Verbrennungsmotors initiiert.

Im Rahmen einer weiteren Ausgestaltung der Erfindung kann vorgesehen sein, dass durch gezieltes Ansteuern der beiden Kupplungen das Aktivieren des Verbrennungsmotors ohne nennenswerte Komforteinbußen für den Fahrer zu realisieren ist. Die Idee, den Motor zu aktivieren, nachdem die getriebeseitige Kupplung geöffnet wurde, ist aufgrund der damit verbundenen Zugkraftunterbrechung nicht akzeptabel. Eine bessere Lösung ist deshalb, das Zuschalten des Verbrennungsmotors nachdem die getriebeseitige Kupplung gezielt in den gleitenden Zustand versetzt wurde. Während dieser Phase ist der Abtrieb vom Antrieb abgekoppelt. Somit kann über das Reibmoment der getriebeseitigen Kupplung zudem das Abtriebsmoment auf einem für den Fahrer akzeptablen Niveau gehalten werden.

Ein möglicher Ablauf der erfindungsgemäßen Strategie kann folgendermaßen durchgeführt werden.

Zunächst wird die Situation "Aktivieren des Verbrennungsmotors" erkannt. Falls die getriebeseitige Kupplung sich im haftenden Zustand befindet, wird das übertragbare Moment an der getriebeseitigen Kupplung derart abgebaut, bis die Kupplung in den rutschenden Zustand übergeht. Dieser Abbau könnte sowohl über eine Momentensteuerung als auch über eine Wegsteuerung an der Stelleinrichtung für diese Kupplung realisiert werden.

Wenn die Schlupfphase sicher erreicht wird (Verriegelungszeit, Mindestschlupf), kann der Verbrennungsmotor mit der E-Maschine zugeschaltet werden. Dies kann bevorzugt durch ein gesteuertes Schließen der motorseitigen Kupplung, z. B. mittels Momentensteuerung, Wegsteuerung oder dergleichen, erreicht werden.

Der schlupfende Zustand an der getriebeseitigen Kupplung sollte aufrecht erhalten werden, bis die motorseitige Kupplung in den haftenden Zustand übergegangen ist und dabei eventuell entstandene Schwingungen im Verbrennungsmotor und in der E-Maschine hinreichend abgeklungen sind.

Die Schlupfphase könnte durch ein Konstanthalten des Abtriebsmoments mit Schlupfüberwachung aufrecht erhalten werden. Besonders vorteilhaft ist es, wenn eine Schlupfregelung für die getriebeseitige Kupplung vorgesehen wird. Dabei wird das Abtriebsmoment durch das Reibmoment an dieser Kupplung entsprechend dem Fahrerwunschmoment eingestellt. Die Höhe des Schlupfes kann derart gewählt werden, dass einerseits ein ungewolltes Haften vermieden wird und andererseits die Verlustleistung an dieser Kupplung gering bleibt.

Wenn die Schlupfphase beendet wird (Bedingung siehe vorletzten Absatz), werden der Verbrennungsmotor und die E-Maschine beschleunigt, wobei durch gezieltes Einkuppeln das Haften der getriebeseitigen Kupplung erreicht wird. Die Ansteuerung der getriebeseitigen Kupplung kann dabei entsprechend dem Einkuppeln während eines Anfahr- oder Schaltvorgangs bei einem Fahrzeug mit automatisierter Kupplungsbetätigung erfolgen. Dieses erfindungsgemäße Verfahren kann bevorzugt sowohl bei Anfahrten als auch beim Beenden von Rekuperationsphasen angewendet werden.

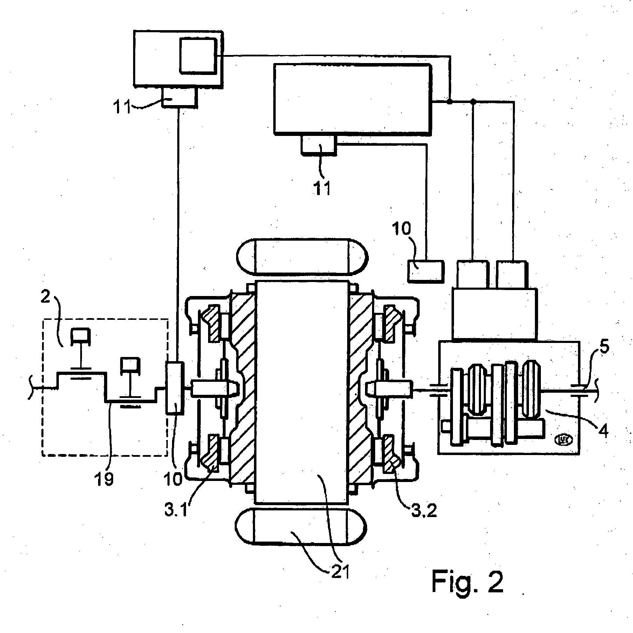

In Figur 2 ist schematisch eine mögliche Anordnung gezeigt, bei der ein Startergenerator zwischen zwei Kupplungen angeordnet ist. Dabei sind mit M1 bis M4 die Gleichstrommotoren bezeichnet. Ferner sind MC der Hauptzylinder, mit SC der Hilfszylinder und mit CSC der konzentrisch angeordnete Hilfszylinder gekennzeichnet.

Nachfolgend wird eine weitere Ausgestaltung der vorliegenden Erfindung beschrieben, bei der ein Impulsstart z. B. bei Fahrzeugen mit einem Startergenerator mit schlupfender Kupplung vorgeschlagen wird.

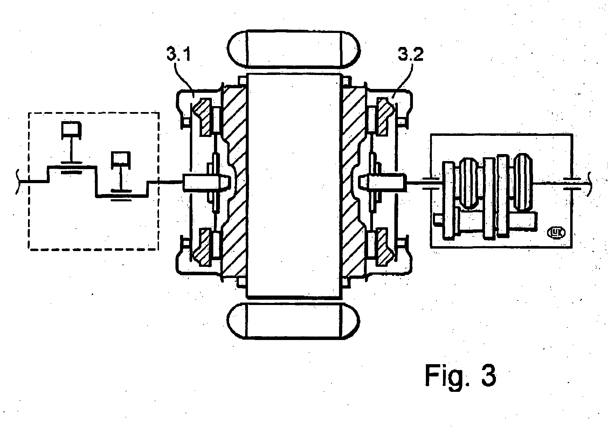

Für den Einsatz eines Startergenerators gibt es verschiedene Konfigurationsmögtichkeiten. Eine Konfigurationsmöglichkeit ist in Figur 3 dargestellt. Hierbei ist der Stärtergenerator zwischen zwei Kupplungen K1 und K2 angeordnet. Die Kupplung K1 verbindet den Startergenerator mit dem Verbrennungsmotor, wobei die Kupplung K2 den Startergenerator mit dem Getriebe verbindet.

Es gibt verschiedene Fahrsituationen, wie z. B. beim Anfahren mit einem Elektromotor, in denen die Kupplung K2 ein Drehmoment überträgt, wobei die Kupplung K1 jedoch geöffnet ist und der Verbrennungsmotor nicht aktiviert ist. Wenn in dieser Situation der Verbrennungsmotor zugeschaltet werden soll, kann die Kupplung K1 geschlossen werden, um den Verbrennungsmotor zu starten.

Bei diesem Schließen der Kupplung kann nun das Moment derart gesteuert werden, dass der Fahrer möglichst geringe bzw. keine Rückwirkungen auf den Triebstrang wahrnimmt. Dies ist steuerungstechnisch nicht leicht zu beherrschen, insbesondere unter Berücksichtigung der verfügbaren Ansteuerungs- und Signalgenauigkeit.

Demzufolge wird erfindungsgemäß vorgeschlagen, dass bevorzugt während des Startvorgangs die Kupplung K2 schlupfend betrieben wird. Dadurch kann, unter der Voraussetzung, dass bis zum Ende des Startvorgangs der Schlupf >0 ist, sichergestellt werden, dass sich die Momentenänderungen an der Startergenerator-/Verbrennungsmotorseite nicht auf den Triebstrang auswirken.

Gemäß einer bevorzugten Weiterbildung der Erfindung kann ein möglicher Startvorgang folgendermaßen durchgeführt werden:

1. Verbrennungsmotor steht, Kupplung K1 geöffnet, Kupplung K2 geschlossen, ohne Schlupf, Fahrzeug fährt ausschließlich mit elektromotorischem Antrieb.

2. Kupplung K2 und der Startergenerator werden derart angesteuert, dass möglichst ruckfrei ein leichter Schlupf an K2 eingestellt wird. Das übertragende Moment an K2 sollte dafür nahezu genauso groß sein, wie das vorher abgegebene Antriebsmoment des Elektromotors.

3. Das Moment des Startergenerators wird erhöht, gleichzeitig wird die Kupplung K1 geschlossen. Hierbei darf das Kupplungsmoment K1 nicht (wesentlich) über dem zusätzlichen Moment des Startergenerators liegen. Der Motor wird gestartet.

Es ist denkbar, dass der Startvorgang modifiziert wird, um diesen weiter zu optimieren.

Alternativ kann auch vorgesehen sein, dass zunächst der Startergenerator auf eine höhere Drehzahl beschleunigt wird, wobei die Kupplung K2 weiterhin ein konstantes Moment überträgt. Danach kann die Kupplung K1 geschlossen werden. Das von der Kupplung K1 übertragende Moment kann nun wesentlich höher als das zusätzliche Moment des Startergenerators sein. Dadurch wird dieser abgebremst und die kinetische Energie wird vom Startergenerator auf den Verbrennungsmotor für den Startvorgang übertragen. Dabei sollte darauf geachtet werden, dass die Kupplung K2 weiterhin ständig im Schlupf betrieben wird, also die Drehzahl des Startergenerators nicht unter die Getriebeeingangsdrehzahl des Getriebes sinkt.

Es sind weitere Möglichkeiten denkbar, etwa wenn der Startergenerator sich im Rekuperationsbetrieb befindet. Dabei ist es für diese Situationen entscheidend, dass die Kupplung K2 sich im Schlupf befindet.

Die vorgeschlagene Steuerstrategie kann bevorzugt bei Hybridfahrzeugen, bei Fahrzeugen mit einem elektrischen Schaltgetriebe (ESG) oder dergleichen eingesetzt werden.

Nachfolgend wird eine nächste Ausgestaltung der vorliegenden Erfindung beschrieben, bei der ein geeignetes Verfahren zum Steuerung bevorzugt der motorseitigen Kupplung bei einem System mit einem Startergenerator, einem Verbrennungsmotor, einer Zweifachkupplung und einem automatisierten Schaltgetriebe (ASG) vorgeschlagen wird.

Eine Aufgabe der Erfindung liegt darin, ein Verfahren zur Ansteuerung der motorseitigen Kupplung zu realisieren, durch das ein komfortables Zuschalten des Verbrennungsmotors ermöglicht wird.

Bei einem System mit einem Startergenerator, einem Verbrennungsmotor, einer Zweifachkupplung und einem automatisierten Schaltgetriebe (ASG), wie es schon in Figur 2 gezeigt ist, dient die motorseitige Kupplung in erster Linie zum Aktivieren des Verbrennungsmotors. Neben dem Zuschalten des Verbrennungsmotors bei Fahrzeugstillstand zur Anfahrt mit dem Verbrennungsmotor und dem Startergenerator kann auch das Zuschalten bei fahrendem Fahrzeug in folgenden Situationen erforderlich sein:

➢ Ende einer Rekuperationsphase (Fahrer betätigt das Gaspedal)
➢ Eine im ersten Augenblick rein elektrisch durchgeführte Anfahrt kann von dem Verbrennungsmotor unterstützt werden, z. B. wenn die Zugkraft nicht ausreicht.

Es sind auch noch andere Situationen denkbar, in denen das Zuschalten des Verbrennungsmotors vorteilhaft ist.

Die getriebeseitige Kupplung kann beim Zuschalten im haftenden Zustand verbleiben, um die Verlustenergie gering zu halten. Ansonsten kann auch das Zuschalten des Verbrennungsmotors mit schlupfender getriebeseitiger Kupplung durchgeführt werden.

Zum Aktivieren bzw. Zuschalten des Verbrennungsmotors kann nun die motorseitige Kupplung durch eine Momenten- und/oder Wegsteuerung (Weg des Stellgliedes) angesteuert werden, bei der das von dieser Kupplung übertragbare Reibmoment bevorzugt monoton oder dergleichen ansteigt. Der Übergang vom gleitenden in den haftenden Zustand kann in diesem Fall jedoch sehr unkomfortabel sein. Der Grund dafür kann darin liegen, dass das übertragende Moment der Kupplung einen sprungförmigen Verlauf aufweist, beispielsweise von einem großen negativen Wert, z. B. - 100 Nm, auf einen kleinen Wert, welcher positiv oder negativ sein kann, je nachdem, ob der Verbrennungsmotor bereits Drehmoment erzeugt oder nicht. Dieses kann sich in einem starken z. B. positiven Ruck äußern.

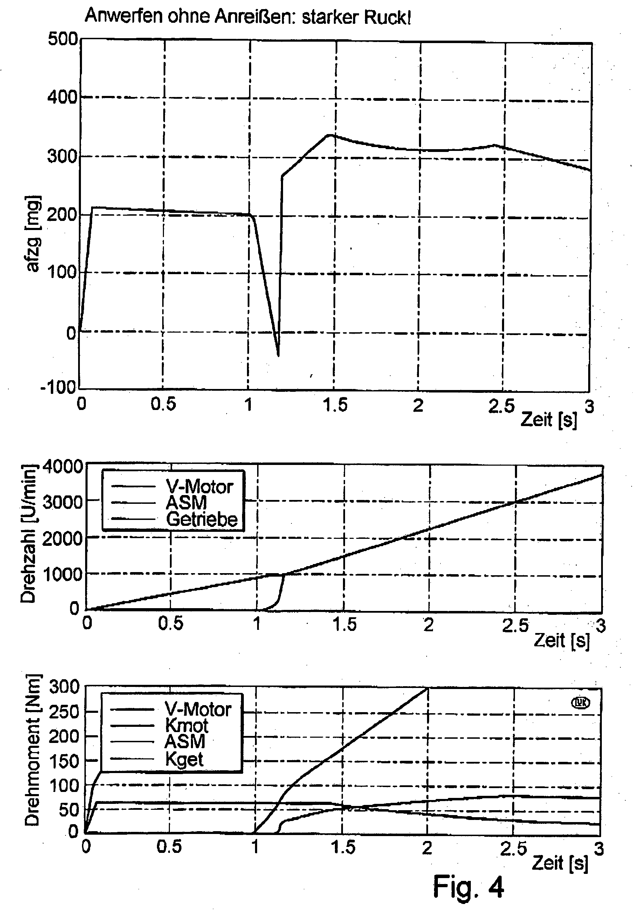

Dies ist aus Figur 4 ersichtlich, welche drei Diagramme zeigt. In dem oberen Diagramm ist die Fahrzeugbeschleunigung afzg über der Zeit dargestellt. Aus dem Verlauf ist der Ruck durch das Minimum angedeutet. Der Ruck tritt auch bei einem Anschleppen eines Fahrzeugs mit einem Handschaltgetriebe auf.

Ferner sind in den beiden unteren Diagrammen in Figur 4 die Verläufe der Drehzahlen des Verbrennungsmotors, des Getriebes und des Asynchronmotors sowie die Verläufe der Momente des Verbrennungsmotors, der motorseitigen Kupplung, der getriebeseitigen Kupplung und des Asynchronmotors über der Zeit dargestellt.

Gemäß der Erfindung wird bevorzugt die motorseitige Kupplung derart angesteuert ("Anreißen des Verbrennungsmotors"), dass der beschriebene Ruck stark verringert wird. Ein Verfahren, welches dies ermöglicht, wird nachfolgend beschrieben:

1. Die Entscheidung, den Verbrennungsmotor zu zuschalten, wird von der Steuerung des Systems getroffen.

2. Bei einer Anfahrt wird das (positive) Drehmoment des Startergenerators beibehalten. Wenn das Ende einer Rekuperationsphase vorliegt, kann das Moment des Startergenerators entweder auf einen positiven Wert angehoben, z. B. durch eine Rampenfunktion oder durch eine andere komfortable Übergangsfunktion, oder zuerst auf einen negativen Wert belassen werden.

3. Danach kann an der motorseitigen Kupplung mittels einer Weg oder Momentensteuerung ein Reibmoment aufgebaut werden, welches das Schleppmoment des Verbrennungsmotors überwindet und die Drehzahl des Verbrennungsmotors ansteigen lässt, welches als "Anreißen des Verbrennungsmotors" bezeichnet wird.

a) Bei einer Anfahrt kann der maximale Gradient des Reibmoments derart gewählt werden, dass die Fahrzeugbeschleunigung nicht abrupt abnimmt.

b) Wenn das Ende einer Rekuperationsphase vorliegt, kann das Drehmoment des Startergenerators durch Kompensation des Kupplungsmoments derart gewählt werden, dass die resultierende Fahrzeugbeschleunigung positiv oder negativ konstant bleibt.

4. Bevor die Drehzahl des Verbrennungsmotors die Drehzahl des Startergenerators erreicht, kann das übertragbare Drehmoment der Kupplung wieder abgebaut werden, vorzugsweise auf einen Wert von 0 Nm, um bei Drehzahlgleichheit a) kein Haften oder b) ein Haften mit sehr geringem Ruck zu realisieren. Der Beginn des Abbaus des Reibmoments kann bevorzugt wie folgt bestimmt werden:

- Die Drehzahl des Verbrennungsmotors überschreitet eine Drehzahlschwelle (z. B. 300 U/min).
- Die Schlupfdrehzahl $n_{VM}$-$n_{SG}$ überschreitet einen Schwellwert (z. B. -500 U/min.)
- Eine der ersten beiden Bedingungen ist erfüllt und der Gradient der Motordrehzahl (oder der Schlupfdrehzahl) überschreitet einen Grenzwert.
- Der Weg des Stellgliedes erreicht eine Schwelle ("Anreißpunkt).
- Eine Kombination der vorangegangenen Bedingungen ist erfüllt.

Der Abbau des Reibmomentes kann, wie unter 3a) und 3b) beschrieben, durchgeführt werden (Gradientenbegrenzung oder mit Momentenkompensation durch den Startergenerator).

5. Wenn während des Schrittes 4. kein Haften herbeigeführt wird (Variante 4a), kann die Kupplung erst dann wieder geschlossen werden, wenn die Drehzahl des Verbrennungsmotors die Drehzahl des Startergenerators um einen gewissen Wert überschritten hat, oder wenn z. B. aufgrund einer Gradientenbetrachtung sicher ist, dass diese Situation eintreten wird.

6. Nun kann eine Einkuppelstrategie, wie sie bei Fahrzeugen mit einem elektronischen Kupplungsmanagement (EKM) oder mit einem automatisierten Schaltgetriebe (ASG) verwendet wird, durchgeführt werden. Zum Einkuppeln wird das Reibmoment über eine Weg- oder Momentensteuerung verändert, ebenso kann der bereits gestartete Verbrennungsmotor derart gesteuert werden, dass das Verschleifen der Drehzahlen komfortabel gestaltet wird.

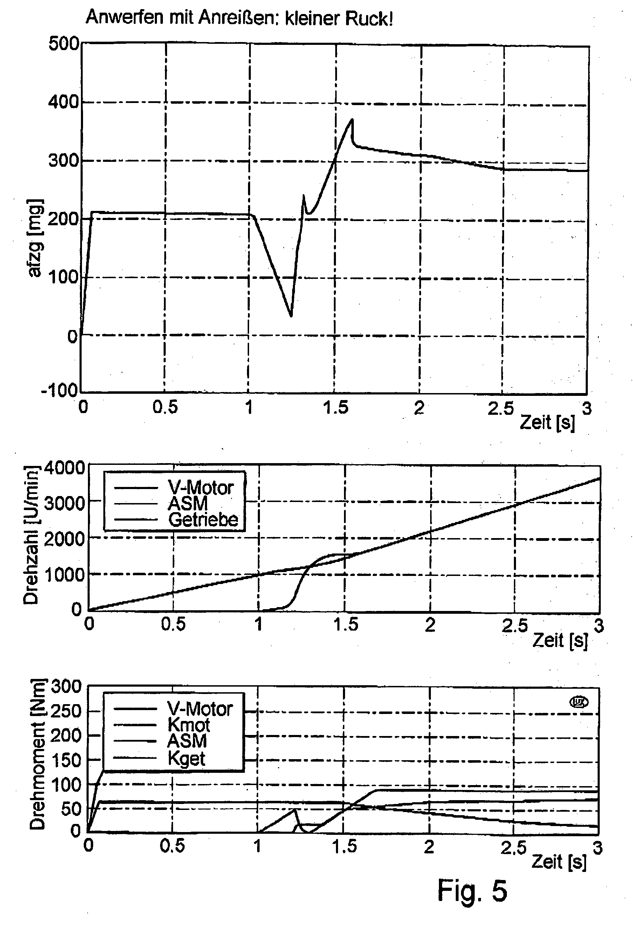

Das vorgeschlagene Verfahren insbesondere zum Ansteuern der motorseitigen Kupplung kann auch noch geeignet modifiziert werden, um es weiter zu optimieren. Ein Zuschalten des Verbrennungsmotors mit sogenanntem Anreißen mit einem geringen Ruck kann der Figur 5 entnommen werden.

In Figur 5 sind drei Diagramme gezeigt. In dem oberen Diagramm ist die Fahrzeugbeschleunigung afzg über der Zeit dargestellt. Aus dem Verlauf ist der geringe Ruck durch das Minimum angedeutet. Ferner sind in den beiden unteren Diagrammen in Figur 5 die Verläufe der Drehzahlen des Verbrennungsmotors, des Getriebes und des Asynchronmotors sowie die Verläufe der Momente des Verbrennungsmotors, der motorseitigen Kupplung, der getriebeseitigen Kupplung und des Asynchronmotors über der Zeit dargestellt.

Um die beschriebene Ansteuerung der Kupplung geeignet durchführen zu können, ist eine Kenntnis des Reibmomentes als Funktion des Stellweges von Vorteil.

Ein weiterer Aspekt der Erfindung besteht darin, dass als Anhaltspunkt für diese Funktion der "Anreißpunkt" verwendet wird, der als der Weg der Stelleinrichtung definiert ist.

Dieser Anreißpunkt wird ermittelt, in dem beim beschriebenen Startvorgang die Motordrehzahl beobachtet wird. Wenn diese einen bestimmten Schwellwert größer 0 U/min, z. B. n=100 U/min oder dergleichen, erreicht, wird die aktuelle Position der Stelleinrichtung festgehalten und somit der Anreißpunkt bestimmt. Dabei kann dieser Schwellwert auch der kleinste mit dem jeweiligen Messprinzip auflösbare Drehzahlwert oder dergleichen sein.

Der Wert des derart ermittelten Punktes kann bevorzugt in einem flüchtigen Speicher oder dergleichen für den weiteren Verlauf des Fahrzyklus und/oder in einem nicht flüchtigen Speicher für spätere Fahrzyklen abgelegt werden. Bei einem weiteren Steuervorgang der Kupplung können nun die Vorgaben an die Stelleinrichtung der Kupplung auf diesen Punkt bezogen werden. Auf diese Weise kann z. B. nach dem Erreichen des Anreißpunktes der Stellweg, wie in dem Schritt 4. erwähnt, wieder zurückgenommen werden. Ebenso ist auch ein Absenken der Verstellgeschwindigkeit kurz vor Erreichen des Punktes denkbar.

Da der Anreißpunkt sehr stark vom Schleppmoment des Motors und damit von der Temperatur abhängen wird, kann in dem Speicher ein um einen Temperaturfaktor und/oder - offset korrigierter Wert des Anreißpunktes abgelegt werden.

Nachfolgend wird eine weitere mögliche Ausgestaltung der vorliegenden Erfindung beschrieben, bei der z. B.

die Drehzahlinformation eines Startergenerators bevorzugt für die Steuerung eines automatisierten Schaltgetriebes (ASG) verwendet wird.

Eine Aufgabe der vorliegenden Erfindung kann darin bestehen, dass die Steuerung hinsichtlich des Komforts, der Verfügbarkeit und der Sicherheit eines automatisierten Schaltgetriebes (ASG) durch Verwendung der Drehzahlinformation eines Startergenerators verbessert wird.

Insbesondere bei einem ASG-System ist die Kenntnis der Getriebeeingangsdrehzahl von höchster Bedeutung. Aus diesem Grund wird in vielen Fällen ein Sensor direkt am Getriebe angebracht, um diese Drehzahl zu bestimmen. Beispielsweise aus Kostengründen kann auf den Sensor verzichtet werden, wobei die Getriebeeingangsdrehzahl aus der Abtriebsdrehzahl und der aktuell vorliegenden Getriebeübersetzung bestimmt werden kann. Für die Steuerung eines Startergenerators, der z. B. zwischen dem Verbrennungsmotor und dem Getriebe angeordnet ist, kann die Drehzahl des Rotors erforderlich sein. Der Startergenerator kann dabei durch eine oder zwei Kupplungen vom Verbrennungsmotor und vom Getriebe getrennt sein.

Bei einem System mit einer Kupplung zwischen dem Startergenerator und dem Getriebe ist die Drehzahl des Startergenerators identisch mit der Drehzahl des Verbrennungsmotors. Ein zusätzlicher Drehzahlsensor (gegenüber einem Fahrzeug ohne Startergenerator) ist deshalb nicht unbedingt erforderlich.

Bei einem System mit einer Kupplung zwischen dem Startergenerator und dem Verbrennungsmotor ist die Drehzahl des Startergenerators identisch mit der Drehzahl des Getriebeeingangs. Ein zusätzlicher Drehzahlsensor ist deshalb nur bedingt erforderlich.

Bei einem System mit einer Zweifachkupplung zwischen dem Startergenerator und dem Getriebe ist die Drehzahl des Startergenerators in einigen Situationen identisch mit der Drehzahl des Verbrennungsmotors sowie in einigen Situationen identisch mit der Drehzahl des Getriebeeingangs. Ein zusätzlicher Drehzahlsensor ist deshalb unbedingt notwendig.

Für einen Vierquadrantenbetrieb des Startergenerators kann zudem eine Richtungserkennung von Vorteil sein.

Erfindungsgemäß kann vorgesehen werden, dass die von dem Startergenerator gelieferte Drehzahl- und evtl. Drehrichtungsinformation für die ASG-Steuerung verwendet wird. Auf diese Weise kann der Komfort, die Sicherheit und die Verfügbarkeit des Systems verbessert werden. Es soll in erster Linie (aber nicht ausschließlich) ein System mit einer Zweifachkupplung betrachtet werden, welches in Figur 2 beispielhaft dargestellt ist.

Bevorzugt bei folgenden Strategien können die Drehzahlinformation des Startergenerators verwendet werden:

1. Bei einer unerwarteten Drehzahldifferenz zwischen dem Verbrennungsmotor und dem Startergenerator und/oder zwischen dem Startergenerator und den Raddrehzahlen bevorzugt unter Berücksichtigung der aktuellen Getriebeübersetzung kann die motorseitige und/oder getriebeseitige Kupplung weiter eingerückt werden, um den Schlupf abzubauen.

2. Bei einem Schaltvorgang mit geschlossener Kupplung zwischen dem Startergenerator und dem Getriebeeingang kann der Zeitpunkt des Beginns und des Endes des Synchronisationsvorgangs detektiert werden. Dies kann bevorzugt für die Steuerung des Schaltaktors, die Adaption der Synchronpunkte auch bereits bei einer Erstinbetriebnahme oder dergleichen verwendet werden.

3. Bei geschlossener Kupplung zwischen dem Startergenerator und dem Getriebeeingang kann mit Hilfe der Raddrehzahlen der im Getriebe eingelegte Gang ermittelt und somit zur Plausibilisierung der Position der Getriebestelleinrichtung verwendet werden.

4. Bei geschlossener Kupplung zwischen dem Startergenerator und dem Getriebeeingang können die Signale der Raddrehzahlsensoren plausibilisiert und/oder evtl. ersetzt werden. Wenn z. B. das Signal eines Raddrehzahlsensors ausgefallen ist, kann bei eingelegtem, bekanntem Gang die fehlende Raddrehzahl aus dem Drehzahlsignal des Startergenerators bestimmt werden.

5. Bei einem Ausfall des Raddrehzahlsensors kann in einen Notlauf übergegangen werden, bei dem die getriebeseitige Kupplung stets geschlossen gehalten wird. Dann kann die Fahrzeuggeschwindigkeit, ausgenommen das Getriebe ist im Leerlauf, über die Drehzahl des Startergenerators und die aktuelle Getriebeübersetzung berechnet werden.

6. Mit der Richtungserkennung des Startergenerators kann bei einer rein elektrischen Anfahrt, bei der die motorseitige Kupplung geöffnet und die getriebeseitige Kupplung geschlossen ist, überprüft werden, ob sich das Fahrzeug entsprechend dem Fahrerwunsch in Bewegung setzt und evtl. dagegen vorgegangen werden soll. Wenn z. B. bei einer Anfahrt in einem Vorwärtsgang festgestellt wird, dass das Fahrzeug rückwärts rollt, kann auf eine Berganfahrt geschlossen werden. Als Reaktion kann bevorzugt eine Erhöhung der Bestromung des E-Motors durchgeführt werden, um das Antriebsmoment in Fahrerwunschrichtung zu erhöhen (Hillholder).

7. Die Drehzahlinformation des Startergenerators kann in Verbindung mit den Motor- und/oder Raddrehzahlen dazu verwendet werden, um die Temperatur von motor- und/oder getriebeseitiger Kupplung abzuschätzen. Dazu kann z. B. ein Temperaturmodell verwendet werden, wie es bereits bei Fahrzeugen mit einem elektronischen Kupplungsmanagement (EKM) oder mit einem automatisierten Schaltgetriebe (ASG) eingesetzt wird.

Nachfolgend wird eine weitere Ausgestaltung der vorliegenden Erfindung beschrieben, bei der ein Fahrzeug mit einem Hybrid-System bzw. ESG-System mit gleicher Anfahrcharakteristik bei verbrennungsmotorischer und elektromotorischer Anfahrt vorgeschlagen wird.

Auf diese Weise wird unabhängig davon, welche Kraftmaschine für die Anfahrt benutzt wird, dem Fahrer ein reproduzierbares Anfahrgefühl vermittelt.

Bei einer anderen möglichen Strategie kann z. B. bei einer Anfahrsteuerung ein pedalwertabhängiger Kupplungsmomentenverlauf vorgegeben werden, insbesondere bei einer Anfahrt mit dem Verbrennungsmotor, oder alternativ den gleichen Momentenverlauf bei einer elektromotorischen Anfahrt.

Bei einem elektronischen Kupplungsmanagement (EKM) oder bei einem automatisierten Schaltgetriebe (ASG) kann eine Anfahrstrategie verwendet werden, bei der der Kupplungsschlupf auf jeden Fall abgebaut wird, sodass ein ruckfreier Übergang vom Schlupfen zum Haften sichergestellt wird und die Drehzahl- bzw. Momentenschwingungen des Verbrennungsmotors sowie im Antriebsstrang vermieden werden.

Mit dieser Strategie wird in vorteilhafter Weise ein reproduzierbares Beschleunigungsverhalten beim Anfahren realisiert.

Aufgabe der Erfindung ist es, wie zu Beginn ausgeführt, auch bei einem hybriden Antriebssystem, bei dem sowohl verbrennungsmotorisch als auch elektromotorisch angefahren werden kann, Strategien zu entwickeln, die dem Fahrer unabhängig vom gewählten Motor ein reproduzierbares Anfahrverhalten geben.

Diese Aufgabe wird durch ein Verfahren mit den Merkmalen gemäß Anspruch 1 gelöst.

Dies gilt insbesondere für Anfahren mit betätigtem Gaspedal. Die vorgenannte Kupplungssteuerung realisiert ein Kriechen bei aktiviertem Leerlaufschalter (unbetätigtem Fahrpedal), welche für beide Motoren gleichermaßen als zeitabhängiger Momentenaufbau umgesetzt werden kann.

Dabei bestehen eine Vielzahl von Kombinationsmöglichkeiten. Z. B. bei einem verbrennungsmotorischen Anfahren kann die gleiche Strategie, wie bei dem EKM/ASG-System, verwendet werden, wobei die Kupplung bevorzugt drehzahlabhängig geschlossen wird.

Bei einer kombinierten Anfahrt mit dem Verbrennungsmotor und dem Elektromotor kann auch das Triebstrangmoment durch das drehzahlabhängige Schließen der Anfahrkupplung aufgebaut werden. Die Koordination der beiden Antriebsmaschinen zur Umsetzung des Fahrerwunsches erfolgt in einem übergeordneten Koordinator. Es gibt also aus Sicht des Anfahrverhaltens keinen Unterschied zu einer reinen verbrennungsmotorischen Anfahrt. Die Kupplungssteuerung verarbeitet dabei das addierte Drehmoment von Verbrennungs- und Elektromotor.

Bei einer rein elektromotorischen Anfahrt kann die Anfahrkupplung von Beginn an geschlossen und das Triebstrangmoment allein durch den E-Motor aufgebaut werden.

Es gibt einen speziellen Programmteil in der Steuerung, der auf der Grundlage des Fahrerwunsches das Hochlaufen des Verbrennungsmotors simuliert. Basierend auf dieser Information und der in der Steuerung hinterlegten Anfahrparameter (Anfahrkennlinie) wird das entsprechende Kupplungssollmoment berechnet. Dieses wird dann bei einer rein elektromotorischen Anfahrt jedoch nicht an der Kupplung, welche geschlossen ist, sondern an dem Elektromotor eingestellt.

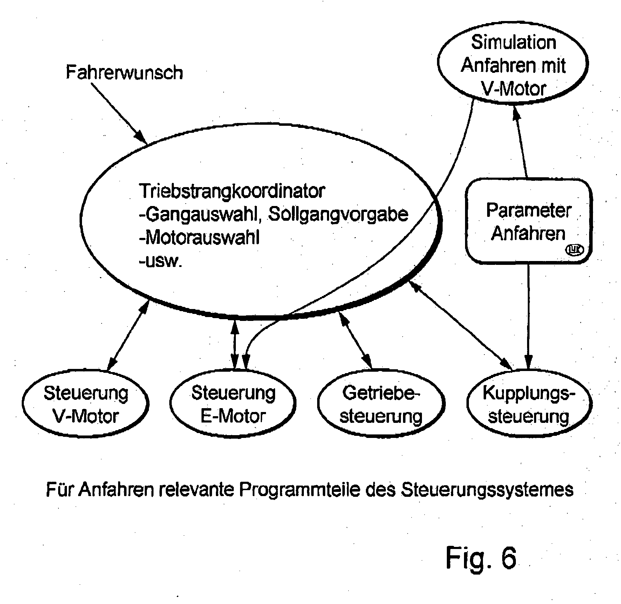

In Figur 6 ist schematisch dargestellt, wie die verschiedenen Programmteile der Steuerungssoftware für ein entsprechendes Fahrzeug vernetzt sind. Es gibt einen übergeordneten Triebstrangkoordinator, der für die Vorgabe der Gänge, für die Aufteilung zwischen den beiden Antriebsmotoren u.a. verantwortlich ist. Die Steuerungen der beiden Antriebsmotoren sowie des Getriebes und der Kupplung werden von diesem Koordinator mit den Informationen über Sollgang, Sollmomente usw. versorgt.

Der zusätzliche Programmteil greift auf die gleichen Applikationsparameter für das Anfahrverhalten des Fahrzeugs zu, wie die Kupplungssteuerung. Das aus der Simulation resultierende Moment wird dann entweder direkt oder über den Koordinator z. B. an die E-Motoren-Steuerung gesendet und dort verarbeitet.

Jeder dieser Programmteile kann grundsätzlich aus mehreren Modulen bestehen. Alle Programmteile in Figur 6 können sich in einem Steuergerät befinden oder auch auf mehrere Steuergeräte, welche miteinander kommunizieren, verteilt sein. Es ist auch möglich, dass die Untermodule eines Programmteils auf verschiedene Steuergeräte verteilt sind, d.h., dass sich die Steuergeräte "die Arbeit teilen".

Zu beachten ist, dass die den Programmteilen zugeordneten Funktionen im gesamten Steuersystem vorhanden sind. Dabei gibt es die verschiedensten Ausführungsmöglichkeiten.

Beispielsweise ist es denkbar, dass anstatt der Simulation auch andere Realisierungs- oder Berechnungsmöglichkeiten des Sollmomentes verwendet werden. Auf diese Weise kann etwa eine feste Kennlinie oder ein einfaches dynamisches Rechenmodell hinterlegt werden, deren Parameter können evtl. offline berechnet werden. Dazu können bevorzugt die entsprechenden Applikationsparameter aus der Kupplungssteuerung herangezogen werden.

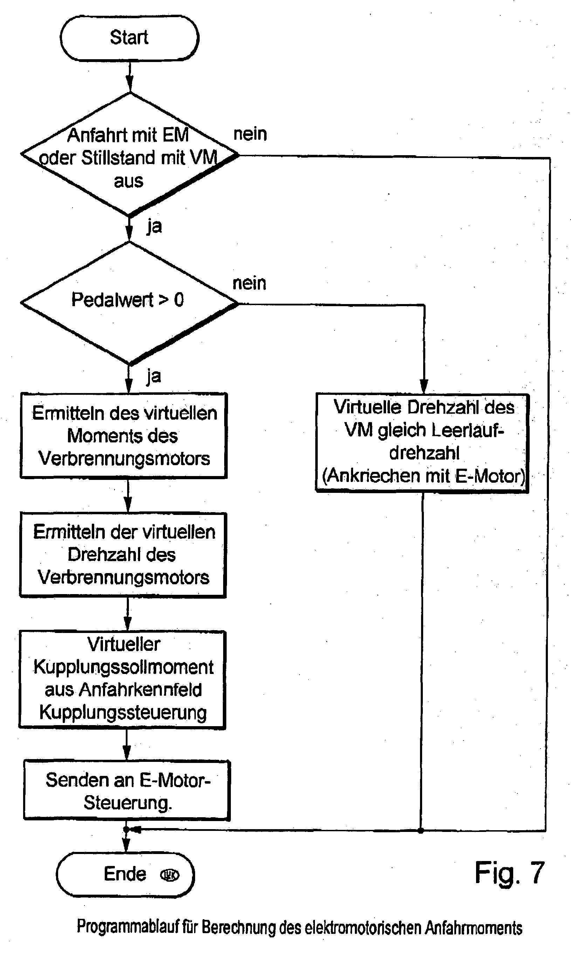

In Figur 7 ist eine mögliche Programmabfolge in dem Programmteil zur Simulation des Verbrennungsmotors dargestellt, wobei der Programmablauf für die Berechnung des elektromotorischen Anfahrmomentes vorgesehen ist.

Dabei kann als Eintrittsbedingung abgefragt werden, ob überhaupt eine rein elektromotorische Anfahrt stattfindet oder bevorsteht.

Auf der Basis des Fahrerwunsches (Pedalwert bzw. Leerlaufschalter) wird dann entschieden, ob für die virtuelle Drehzahl des E-Motors dessen Leerlaufdrehzahl verwendet wird ($n_{VM\_virt}=n_{VM\_Leer}$ Sicherstellen der Anfangsbedingung bei nachfolgender Anfahrt, falls Pedal noch nicht getreten ist), oder ob eine Berechnung des zur Kupplungssteuerung passenden E-Motor-Moments während der Anfahrt erfolgt.

Bei der Simulation des Verbrennungsmotors kann bevorzugt dessen virtuelles Moment anhand des Motorkennfeldes

$$M_{VM\_virt} = M_{VM}(n_{VM\_virt}, Pedalwert)$$

und durch Integration der Bewegungsgleichung auch die neue virtuelle Drehzahl

$$n_{VM\_virt\_alt} = n_{VM\_virt}$$

$$n_{VM\_virt} = n'_{VM\_virt\_alt} + \frac{30 \, M_{VM\_virt}}{\pi \cdot J_{VM}} \cdot \Delta T$$

berechnet werden.

Diese Daten dienen dann zur Berechnung des virtuellen Kupplungssollmomentes entsprechend des Anfahrkennfeldes der Kupplungssteuerung.

$$M_{R\_Soll\_virt} = M_{Anfahr}(n_{VM\_virt}, n_{Getriebe})$$

Die E-Motoren-Steuerung erhält den Wert des virtuellen Kupplungssollmomentes als Sollvorgabe für den E-Motor. Damit verhält sich das Fahrzeug bei der elektromotorischen Anfahrt so, wie es sich bei einer verbrennungsmotorischen Anfahrt mit gleichem Pedalwert verhalten würde.

Der Kerngedanke bei dieser Simulation ist "Was wäre, wenn mit dem Verbrennungsmotor angefahren wird?". Bei der Berechnung des virtuellen Momentes und der virtuellen Drehzahl des Verbrennungsmotors können auch andere Informationskanäle, wie z. B. Informationen aus der Motorsteuerung des Verbrennungsmotors oder andere Gleichungen, wie z. B. ein anderer Integrationsalgorithmus der Bewegung, verwendet werden.

Die erfindungsgemäße Konzeption kann bevorzugt bei einem Fahrzeug mit einem HybridAntrieb zum Einsatz kommen. Ferner kann die Anfahrstrategie bei elektrischen Anfahrten mit einem Startergenerator oder bei Fahrzeugen mit einem elektrischen Schaltgetriebe (ESG) verwendet werden.

**Patentansprüche**

**1.** Verfahren zur Steuerung eines Antriebsstrangs, der zum Antreiben einen Verbrennungsmotor, einen damit verbundenen Elektromotor und eine nachgeschaltete Reibungskupplung aufweist, für ein Fahrzeug, das sowohl verbrennungsmotorisch als auch elektromotorisch als auch verbrennungsmotorisch-elektromotorisch kombiniert anfahren kann, **gekennzeichnet durch** die folgenden Schritte:

Simulieren eines Hochlaufens des Verbrennungsmotors auf Grundlage eines mit dem Fahrpedal übermittelten Fahrerwunsches,
Berechnen und Einstellen eines Kupplungssollmoments entsprechend dem simulierten Hochlaufen des Verbrennungsmotors und einer Anfahrkennlinie des Fahrzeugs, um beim kombinierten Anfahren des Fahrzeugs mit dem Verbrennungsmotor und dem Elektromotor eine dem reinen verbrennungsmotorischen Anfahren des Fahrzeugs entsprechende Anfahrcharakteristik zu erreichen, oder

Berechnen und Einstellen eines Sollmoments für den Elektromotor entsprechend dem simulierten Hochlaufen des Verbrennungsmotors und einer Anfahrkennlinie des Fahrzeugs, um beim reinen elektromotorischen Anfahren des Fahrzeugs mit geschlossener Kupplung eine dem reinen verbrennungsmotorischen Anfahren des Fahrzeugs entsprechende Anfahrcharakteristik zu erreichen, wobei bei der Simulation des Hochlaufens des Verbrennungsmotors dessen jeweiliges virtuelles Drehmoment ($M_{UM\_virt}$) anhand des Verbrennangsmotorkennfelds ($M_{VM}(n_{VM\_virt,\ Pedalweit})$) mit Hilfe der jeweiligen virtuellen Verbrennungsmotordrehzahl ($n_{VM\_virt}$) and des jeweiligen Fahrpedalwerts(Pedalwert) mit der Gleichung

$$M_{VM\_virt} = M_{VM}(n_{VM\_virt}, Pedalwert)$$

berechnet wird, und wobei **durch** Integration der Bewegungsgleichung eine neue virtuelle Drehzahl ($n_{VM\_virt}$) mit Hilfe des jeweiligen Verbrennungsmotorträgheitmoments ($J_{VM}$) und der bein Anfahren abgelanfenen Zeit(T) mit den Gleichungen

$$n_{VM\_virt\_alt} = n_{VM\_virt}$$

$$n_{VM\_virt} = n_{VM\_virt\_alt} + \frac{30 \cdot M_{VM\_virt}}{\pi \cdot J_{VM}} \cdot \Delta T$$

berechnet wird, und wobei **durch** Integration der Bewegungsgleichung eine neue virtuellen Drehzahl des Verbrennungsmotors ($n_{VM\_virt}$) und der jeweiligen Getriebeeingangsdrehzahl($n_{Getriebe}$) ein virtuelles Kupplungssollmoment ($M_{R\_Soll\_virt}$) entsprechend des Anfahrkennfelds der Kupplungssteuerung ($M_{Anfahr}(n_{VM\_virt}, n_{Getriebe})$) mit Hilfe der jeweiligen Getriebeeingangsdrehzahl($n_{Getriebe}$) mit der Gleichung

$$M_{R\_Soll\_virt} = M_{Anfahr}(n_{VM\_virt}, n_{Getriebe})$$

berechnet wird.

2. Verfahren nach Anspruch 1, wobei die Steuerung des Elektromotors den Wert des virtuellen Kupplungssollmoments als Sollvorgabe für den Elektromotor erhält, so dass sich das Fahrzeug beim elektromotorischen Anfahren so verhält, wie es sich beim verbrennungsmotorischen Anfahren mit gleichem Pedalwert verhalten würde.

**Claims**

1. Method for controlling a drive train which has, for the purpose of driving, an internal combustion engine, an electric motor connected thereto and a friction clutch connected downstream, for a vehicle which starts by means of an internal combustion engine, an electric motor or a combination of an internal combustion engine and electric motor, **characterized by** the following steps:

   simulation of revving up of the internal combustion engine on the basis of a driver's request conveyed with the accelerator pedal,
   calculation and setting of a clutch setpoint torque in accordance with the simulated revving up of the internal combustion engine and a starting characteristic curve of the vehicle, in order to achieve, during the combined starting of the vehicle with the internal combustion engine and the electric motor, a starting characteristic which corresponds to starting of the vehicle purely by means of the internal combustion engine, or
   calculating and setting a setpoint torque for the electric motor in accordance with the simulated revving up of the internal combustion engine and a starting characteristic curve of the vehicle, in order to achieve, during starting of the vehicle purely by means of the electric motor with the clutch closed, a starting characteristic which corresponds to starting of the vehicle purely by the internal combustion engine, wherein during the simulation of the revving up of the internal combustion engine the respective virtual torque ($M_{VM\_virt}$) thereof is calculated by means of the internal combustion engine characteristic diagram ($M_{VM}$ ($n_{VM\text{-}virt}$, pedal value)) using the respective virtual internal combustion engine rotational speed ($u_{um\text{-}virt}$) and the respective accelerator pedal value (pedal value) with the equation

$$M_{VM\_virt} = M_{VM}(n_{VM\_virt}, \ pedal\ value),$$

and wherein by integrating the movement equation a new virtual rotational speed ($n_{vm\_virt}$) is calculated using the respective internal combustion engine inertia torque ($J_{VM}$) and the time (T) which has passed during the starting process, with the equations

$$n_{VM\_virt\_alt} = n_{VM\_virt}$$

$$n_{VM\_virt} = n_{VM\_virt\_alt} + \frac{30 M_{VM\_virt}}{\pi \cdot J_{VM}} \cdot \varDelta T,$$

and wherein a virtual setpoint torque ($M_{R\text{-set-point-virt}}$) corresponding to the starting characteristic diagramme of the clutch controller ($M_{start}$ ($n_{VM\_virt}$, ntransmission)) is calculated using the respective transmission input rotational speed ($n_{transmission}$) from the respective virtual rotational speed of the internal combustion engine ($n_{VM\_virt}$) and the respective transmission input rotational speed ($n_{transmission}$), with the equation

$$M_{R\_setpoint\_virt} = M_{start}(n_{VM\_virt}, \ n_{transmission}).$$

**2.** Method according to Claim 1, wherein the controller of the electric motor receives the value of the virtual clutch setpoint torque as a predefined setpoint value for the electric motor, with the result that during the starting by electric motor the vehicle behaves as it would do in the case of starting by internal combustion engine with the same pedal value.

**Revendications**

**1.** Procédé de commande d'une chaîne cinématique, qui présente, pour l'entraînement, un moteur à combustion interne, un moteur électrique raccordé à celui-ci et un embrayage à friction monté en aval de celui-ci, pour un véhicule qui peut démarrer à la fois par le biais du moteur à combustion interne et par le biais du moteur électrique ainsi que par une combinaison du moteur à combustion interne et du moteur électrique, **caractérisé par** les étapes suivantes :

- simulation d'une accélération du moteur à combustion interne sur la base d'un souhait du conducteur transmis avec la pédale d'accélération,
- calcul et ajustement d'un couple de consigne d'embrayage correspondant à l'accélération simulée du moteur à combustion interne et à une courbe caractéristique de démarrage du véhicule, afin d'obtenir, lors du démarrage combiné du véhicule avec le moteur à combustion interne et le moteur électrique, une caractéristique de démarrage correspondant au démarrage du véhicule purement au moyen du moteur à combustion interne, ou
- calcul et ajustement d'un couple de consigne pour le moteur électrique correspondant à l'accélération simulée du moteur à combustion interne et à une courbe caractéristique de démarrage du véhicule, afin d'obtenir, lors du démarrage du véhicule purement au moyen du moteur électrique avec l'embrayage fermé, une caractéristique de démarrage correspondant au démarrage du véhicule purement au moyen du moteur à combustion interne, où, lors de la simulation de l'accélération du moteur à combustion interne, son couple virtuel respectif ($M_{VM\_virt}$) est calculé à l'aide du champ caractéristique du moteur à combustion interne ($M_{VM}(n_{VM\_virt}$, valeur de pédale)) à l'aide du régime du moteur à combustion interne virtuel respectif ($n_{VM\_virt}$) et de la valeur respective de la pédale d'accélération (valeur de pédale) par l'équation

$$M_{VM\_virt} = M_{VM}(n_{VM\_virt}, \text{valeur de pédale}),$$

et où, par intégration de l'équation de déplacement, un nouveau régime virtuel ($n_{VM\_virt}$) est calculé à l'aide du couple d'inertie du moteur à combustion interne respectif ($J_{VM}$) et du temps (T) écoulé lors du démarrage, par les équations

$$n_{VM\_virt\_alt} = n_{VM\_virt}$$

$$n_{VM\_virt} = n_{VM\_virt\_alt} + \frac{30 M_{VM\_virt}}{\pi \cdot J_{VM}} \Delta T ,$$

et où, à partir du régime virtuel respectif du moteur à combustion interne ($n_{VM\_virt}$) et du régime d'entrée respectif de la boîte de vitesses ($n_{Getriebe}$), un couple de consigne d'embrayage virtuel ($M_{R\_soll\_virt}$) correspondant au champ caractéristique de démarrage de la commande d'embrayage ($M_{Anfahr}(n_{VM\_virt})\,n_{Getriebe}$)) est calculé à l'aide du régime d'entrée respectif de la boîte de vitesses ($n_{Getriebe}$) par l'équation

$$M_{R\_Soll\_virt} = M_{Anfahr}\ (n_{VM\_virt},\ n_{Getriebe}) .$$

2. Procédé selon la revendication 1, dans lequel la commande du moteur électrique reçoit la valeur du couple de consigne virtuel de l'embrayage en tant que valeur de consigne prédéfinie pour le moteur électrique, de sorte que le véhicule, lors du démarrage au moyen du moteur électrique, se comporte comme il se comporterait lors du démarrage au moyen du moteur à combustion interne avec la même valeur de pédale.

Fig. 1

EP 2 096 014 B1

Fig. 2

Fig. 3

Anwerfen ohne Anreißen: starker Ruck!

Fig. 4

Anwerfen mit Anreißen: kleiner Ruck!

Fig. 5

Fahrerwunsch

Simulation
Anfahren mit
V-Motor

Triebstrangkoordinator
-Gangauswahl, Sollgangvorgabe
-Motorauswahl
-usw.

Parameter
Anfahren
(LuK)

Steuerung
V-Motor

Steuerung
E-Motor

Getriebesteuerung

Kupplungssteuerung

Für Anfahren relevante Programmteile des Steuerungssystemes

Fig. 6

```
                    ┌─────────────────┐
                    │      Start      │
                    └─────────────────┘
                             │
                             ▼
                      ╱───────────╲
                     ╱ Anfahrt mit EM ╲      nein
                    ╱ oder Stillstand mit VM ╲──────────────────────┐
                     ╲     aus     ╱                                 │
                      ╲───────────╱                                  │
                           │ ja                                      │
                           ▼                                         │
                      ╱───────────╲                                  │
                     ╱             ╲   nein                          │
                    ╱  Pedalwert > 0 ╲──────────────┐               │
                     ╲             ╱                 │               │
                      ╲───────────╱                  │               │
                           │ ja                      ▼               │
                           ▼                 ┌──────────────────┐   │
               ┌──────────────────────┐      │ Virtuelle Drehzahl des │
               │ Ermitteln des virtuellen │  │  VM gleich Leerlauf-   │
               │    Moments des       │      │      drehzahl          │
               │ Verbrennungsmotors   │      │ (Ankriechen mit E-Motor) │
               └──────────────────────┘      └──────────────────┘   │
                           │                          │              │
                           ▼                          │              │
               ┌──────────────────────┐               │              │
               │ Ermitteln der virtuellen │           │              │
               │    Drehzahl des      │               │              │
               │ Verbrennungsmotors   │               │              │
               └──────────────────────┘               │              │
                           │                           │              │
                           ▼                           │              │
               ┌──────────────────────┐                │              │
               │     Virtueller       │                │              │
               │ Kupplungssollmoment  │                │              │
               │ aus Anfahrkennfeld   │                │              │
               │ Kupplungssteuerung   │                │              │
               └──────────────────────┘                │              │
                           │                            │              │
                           ▼                            │              │
               ┌──────────────────────┐                │              │
               │  Senden an E-Motor-  │                │              │
               │      Steuerung.      │                │              │
               └──────────────────────┘                │              │
                           │◄───────────────────────────┴──────────────┘
                           ▼
                    ┌─────────────────┐
                    │    Ende         │
                    └─────────────────┘
```

Fig. 7

Programmablauf für Berechnung des elektromotorischen Anfahrmoments

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0916547 A2